# EUROPEAN PATENT SPECIFICATION

(11) **EP 4 019 897 B1**
(45) Date of publication and mention of the grant of the patent: **17.07.2024**
(21) Application number: 21207119.5
(22) Date of filing: 09.11.2021
(51) Int. Cl.: G01C 21/00, G01C 21/30, G01S 19/41, G01C 21/36, G01S 19/48, G01C 15/00, G01S 19/14

(54) **AUTONOMOUS TRAVEL SYSTEM**
AUTONOMES FAHRSYSTEM
SYSTÈME DE DÉPLACEMENT AUTONOME

(30) Priority: 04.12.2020 JP 2020201616
(43) Date of publication of application: 29.06.2022
(73) Proprietor: KABUSHIKI KAISHA TOYOTA JIDOSHOKKI, Kariya-shi, Aichi-ken 448-8671 (JP)
(72) Inventor: Uno, Takashi, Kariya-shi, Aichi-ken 448-8671 (JP)
(74) Representative: Hoffmann Eitle

(56) References cited:
- AU-A1- 2015 347 785
- KR-A- 20060 003 546
- KR-A- 20190 073 144
- KR-B1- 101 035 538
- US-A1- 2014 371 952
- US-A1- 2017 248 948
- US-A1- 2019 265 038
- HUI FANG ET AL: "Ground-Texture-Based Localization for Intelligent Vehicles", IEEE TRANSACTIONS ON INTELLIGENT TRANSPORTATION SYSTEMS, IEEE, PISCATAWAY, NJ, USA, vol. 10, no. 3, 1 September 2009 (2009-09-01), pages 463 - 468, XP011281957, ISSN: 1524-9050, DOI: 10.1109/TITS.2009.2026445
- KOZAK KRISTOPHER ET AL: "Ranger: A ground-facing camera-based localization system for ground vehicles", 2016 IEEE/ION POSITION, LOCATION AND NAVIGATION SYMPOSIUM (PLANS), IEEE, 11 April 2016 (2016-04-11), pages 170 - 178, XP032905789, DOI: 10.1109/PLANS.2016.7479698

## Description

### BACKGROUND ART

The present disclosure relates to an autonomous travel system.

As a technique for estimating a state (e.g. positional information) of an automated vehicle, Simultaneous Localization and Mapping (SLAM) has been known. The SLAM is a technique that carries out a self-position estimation of a moving body and mapping of an environment simultaneously, which allows the moving body to create a map of an environment under a situation where the environment is unknown.

The moving body carries out a specific task while avoiding an obstruct using the constructed map information.

As a technique that estimates a self-position of an autonomous travel vehicle using a road image, a technique disclosed in US Patent No. 8725413 has been known. In this technique, a camera capturing an image of a road surface is disposed on a lower surface of a vehicle body, and the autonomous travel vehicle estimates its position by comparing a feature of an image captured in advance (a map image) and a feature of an image of the road surface at a current time (an actual image).

However, the accuracy of a map decreases in a configuration in which a camera, an Inertial Measurement Unit (IMU), and a Global Positioning System (GPS) are mounted on an autonomous travel vehicle, images are captured at set distance intervals while the autonomous travel vehicle travels, and coordinates and positional information of the autonomous travel vehicle to be associated with the captured image are estimated based on the measurement information by the IMU, the GPS and the camera to create a map. Specifically, accuracy of the coordinates and the positional information of the autonomous travel vehicle to be associated with the image captured during the mapping is poor due to poor positioning accuracy of the IMU and the GPS. As a result, autonomous travelling of the autonomous travel vehicle becomes less precise due to the poor accuracy in the estimation of the coordinates and the positional information of the autonomous travel vehicle.

HUI FANG et al.: "Ground-Texture-Based Localization for Intelligent Vehicles", IEEE TRANSACTIONS ON INTELLIGENT TRANSPORTATION SYSTEMS relates to a localization system for intelligent vehicles in short trips at low speed in urban environments.

KOZAK KRISTOPHER et al.: "Ranger: A ground-facing camera-based localization system for ground vehicles", 2016 IEEE/ION POSITION, LOCATION AND NAVIGATION SYMPOSIUM (PLANS) relates to a localization system performing map-based localization using a ground-facing camera.

US 2019/265038 A1 relates to a method for estimating vehicle location by obtaining change events from an event camera's observations of a ground surface moving relative to the vehicle, determining a signature of the ground surface from the change events, and estimating the location using the signature. KR 2019 0073144 A relates to a system for managing a condition of a road surface. More specifically, the system for managing a condition of a road surface detects a defect of a road surface by analyzing an image photographed by a stereo camera and senses an obstacle on a road. The system for managing a condition of a road surface manages information about the obstacle sensed and the detected defect of the road and shares the information to drivers.

AU 2015 347 785 A1 relates to a field state detection system for detecting a field hardness and a work finish as a field state, and particularly relates to a technique of measuring a field hardness fro man among of sinkage from an image of a work vehicle and a field surface captured by a camera provided to the work vehicle, and detecting an abnormality of a work vehicle from a change in the field surface

KR 2006 0003546 A relates to mobile system for obtaining precise map data using differential global positioning system.

KR 101 035 538 B1 relates to an apparatus and method for obtaining real time position information of a car lane.

US 2017/248948 A1 relates to a flying vehicle tracking method, a flying vehicle image acquiring method, a flying vehicle displaying method and a flying vehicle guiding system for executing an autonomous flight of a small type unmanned air vehicle (UAV).

US 2014/371952 A1 relates to a flying vehicle guiding system and a flying vehicle guiding method for remote controlling a small type unmanned air vehicle (UAV: Unmanned Air Vehicle).

### SUMMARY

The present invention is defined by the independent claim. A preferred embodiment is defined by the dependent claim. Further aspects are provided for facilitating the understanding of the invention. In accordance with an aspect of the present disclosure, there is provided an autonomous travel system including a road surface image acquisition device disposed on a lower surface of a vehicle body of an autonomous travel vehicle, and configured to acquire an image of a road surface below the vehicle body, a storage unit mounted on the autonomous travel vehicle, and configured to store a map image of the road surface with which coordinates and positional information of the autonomous travel vehicle are associated, an estimation unit mounted on the autonomous travel vehicle, and configured to estimate the coordinates and the positional information of the autonomous travel vehicle by comparing a feature extracted from the image of the road surface acquired by the road surface image acquisition device and a feature extracted from the map image, a ground satellite signal reception antenna installed on a ground where the autonomous travel vehicle travels, and configured to receive a radio wave from a satellite, a ground wireless communication device configured to transmit measurement information acquired through the ground satellite signal reception antenna to the autonomous travel vehicle wirelessly, a vehicle wireless communication device mounted on the autonomous travel vehicle, and configured to receive the measurement information from the ground wireless communication device, a vehicle satellite signal reception antenna mounted on the autonomous travel vehicle, and configured to receive the radio wave from the satellite, and a mapping unit mounted on the autonomous travel vehicle, and configured to create the map image of the road surface with which the coordinates and the positional information are associated, from the image of the road surface acquired by the road surface image acquisition device based on the measurement information acquired through the ground satellite signal reception antenna and the
measurement information acquired through the vehicle satellite signal reception antenna, in mapping outdoors.

Other aspects and advantages of the disclosure will become apparent from the following description, taken in conjunction with the accompanying drawings, illustrating by way of example the principles of the disclosure.

### BRIEF DESCRIPTION OF THE DRAWINGS

The disclosure, together with objects and advantages thereof, may best be understood by reference to the following description of the embodiments together with the accompanying drawings in which:
FIG. 1 is a schematic view, illustrating an overall configuration of an autonomous travel system according to an embodiment;
FIG. 2 is an enlarged view of a part E of FIG. 1;
FIG. 3 is a schematic plan view of the autonomous travel system;
FIG. 4 is a block diagram illustrating an electrical configuration of the autonomous travel system;
FIG. 5 is an example of an image;
FIG. 6 is a flowchart for describing an outdoor mapping process;
FIG. 7 is a flowchart for describing an indoor mapping process;
FIG. 8A is a timing chart for describing acquisition of data by a camera, FIG. 8B is a timing chart for describing acquisition of data by a ground GNSS antenna, FIG. 8C is a timing chart for describing acquisition of data by a vehicle GNSS antenna, FIG. 8D is a timing chart for describing acquisition of data by a total station, FIG. 8E is a timing chart for describing association of data when the autonomous travel vehicle travels outdoors, and FIG. 8F is a timing chart for describing association of data when the autonomous travel vehicle travels indoors; and
FIG. 9 is a schematic view, illustrating an overall configuration of an autonomous travel system according to another example.

### DETAILED DESCRIPTION OF THE EMBODIMENTS

The following describes an embodiment of the present disclosure with reference to the accompanying drawings.

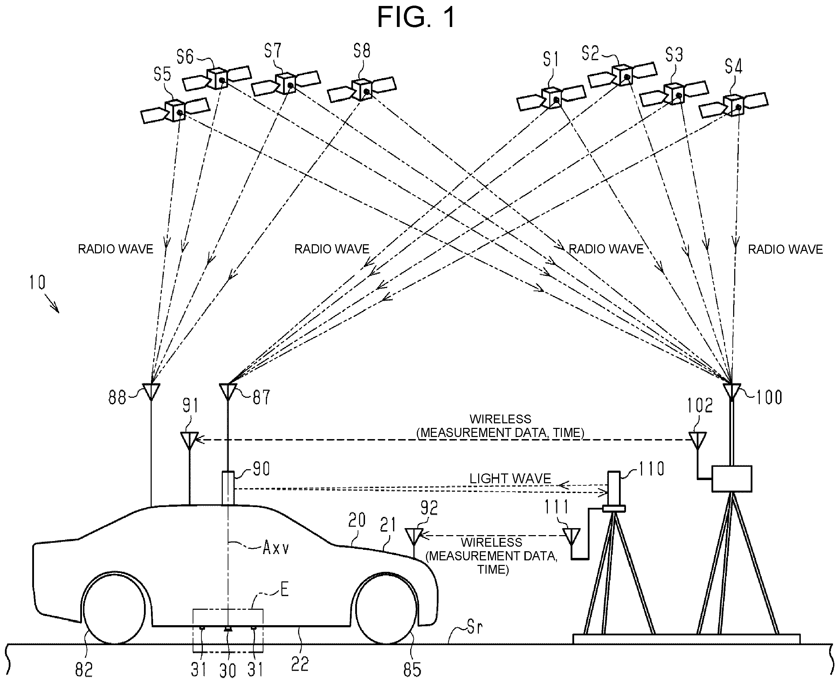

As illustrated in FIG. 1, an autonomous travel system 10 is provided with an autonomous travel vehicle 20. The autonomous travel vehicle 20 is a four-wheel drive vehicle, and includes a vehicle body 21, driving wheels 82 disposed in a lower part of the vehicle body 21, and steering wheels 85 disposed in the lower part of the vehicle body 21.

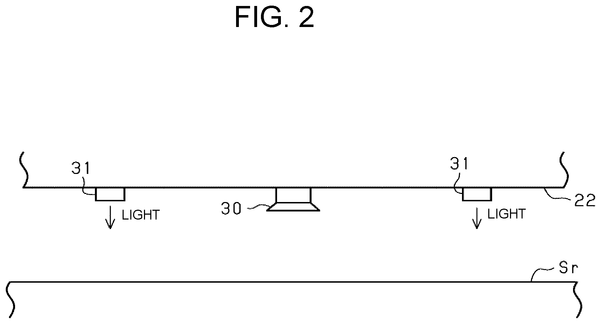

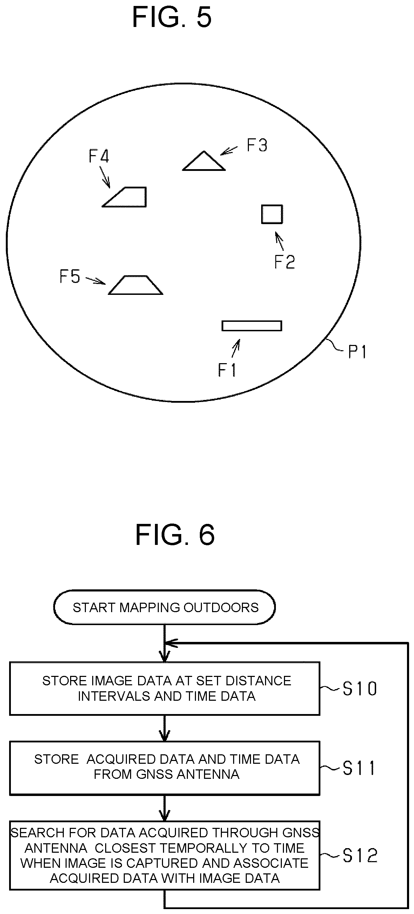

As illustrated in FIGS. 1 and 2, the autonomous travel vehicle 20 includes a camera 30. The camera 30 is disposed at a center of a lower surface 22 of the vehicle body 21 of the autonomous travel vehicle 20, and captures an image of a road surface Sr below the vehicle body 21. The camera 30 corresponds to a road surface image acquisition device that is configured to acquire images of the road surface Sr at predetermined intervals. An example of an image P1 captured by the camera 30 is illustrated in FIG. 5. The image P1 has a circular shape.

As illustrated in FIG. 2, the autonomous travel vehicle 20 includes a light source 31 for lighting. The light source 31 is disposed in the lower surface 22 of the vehicle body 21. The light source 31 is, for example, a light emitting diode (LED). The light source 31 is provided for irradiating a shooting area for the camera 30 in the road surface Sr with light. The light source 31 is configured to be turned on in synchronization with a capturing timing of the camera 30.

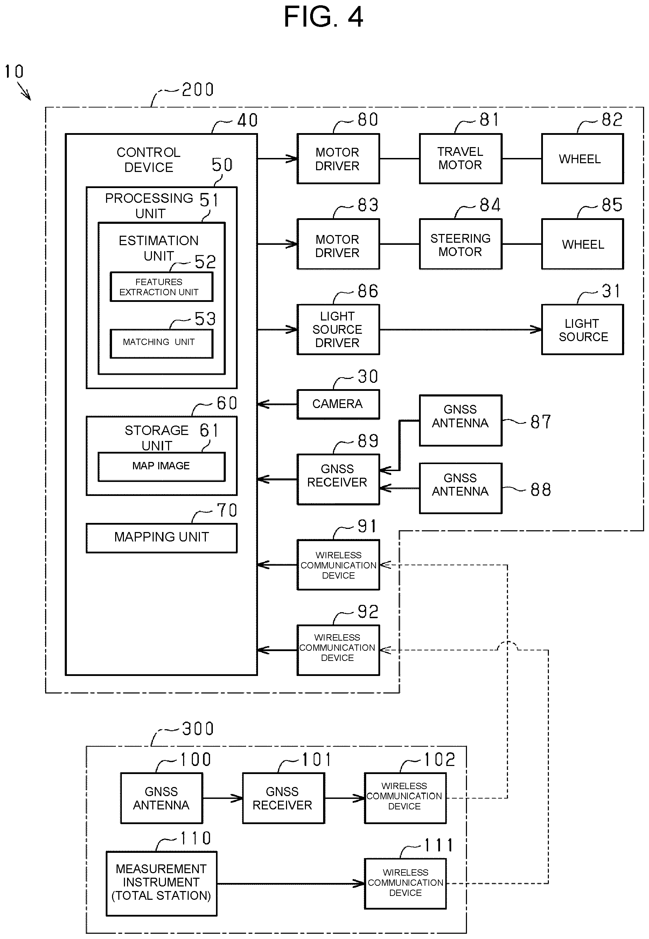

As illustrated in FIG. 4, the autonomous travel system 10 includes a moving body side apparatus (a vehicle side apparatus) 200 mounted on the autonomous travel vehicle 20 and a ground side apparatus (a reference side apparatus) 300 installed on the ground where the autonomous travel vehicle 20 travels.

The moving body side apparatus (the vehicle side apparatus) 200 includes a control device 40. The control device 40 includes a processing unit 50, a storage unit 60, and a mapping unit 70. The processing unit 50 includes an estimation unit 51, and the estimation unit 51 includes a feature extraction unit 52 and a matching unit 53. The moving body side apparatus (the vehicle side apparatus) 200 includes a motor driver 80, a travel motor 81, a motor driver 83, a steering motor 84, a light source driver 86, vehicle Global Navigation Satellite System (GNSS) antennas 87, 88 as vehicle satellite signal reception antennas, a GNSS receiver 89, and wireless communication devices 91, 92.

The ground side apparatus 300 (the reference side apparatus) includes a ground GNSS antenna 100 as a ground satellite signal reception antenna, a GNSS receiver 101, a wireless communication device 102, a total station 110 as a measurement instrument, and a wireless communication device 111.

The wireless communication device 91 of the moving body side apparatus (the vehicle side apparatus) 200 and the wireless communication device 102 of the ground side apparatus (the reference side apparatus) 300 are wirelessly communicable therebetween. The wireless communication device 92 of the moving body side apparatus (the vehicle side apparatus) 200 and the wireless communication device 111 of the ground side apparatus (the reference side apparatus) 300 are wirelessly communicable therebetween.

As illustrated in FIG. 4, the camera 30 is connected to the control device 40. The control device 40 is configured to operate the driving wheels 82 by controlling the travel motor 81 through the motor driver 80. The control device 40 is configured to operate the steering wheels 85 by controlling the steering motor 84 through the motor driver 83. The control device 40 is configured to control the light source 31 through the light source driver 86.

The storage unit 60 stores various programs to control the autonomous travel vehicle 20. The control device 40 may include a dedicated hardware executing at least a part of various processes, for example, an application specific integrated circuit (ASIC). The control device 40 may be constituted as at least one processor configured to operate in accordance with the computer program, at least one dedicated hardware circuit such as the ASIC, or a circuit including a combination of these. The processor includes a CPU and a memory such as a RAM and a ROM. The memory stores a program code or an instruction causing the CPU to execute the processes. The memory, i.e., a computer readable medium, includes any type of a memory accessible from a general purpose computer or a special purpose computer.

The control device 40 operates the autonomous travel vehicle 20 by controlling the travel motor 81 and the steering motor 84 in accordance with the programs stored in the storage unit 60. The autonomous travel vehicle 20 of the present embodiment is a vehicle that is controlled by the control device 40 to travel and be steered automatically without being operated by an operator.

The storage unit 60 stores a map image 61 of a road surface, that is, the map image 61 of the road surface Sr captured in advance. The map image 61 is an image of the road surface with which the coordinates and the positional information of the autonomous travel vehicle 20 are associated.

The estimation unit 51 is configured to estimate the coordinates and the positional information of the autonomous travel vehicle 20 by comparing, for example, features (a point group) F1 to F5 extracted from the image of the road surface Sr captured (acquired) by the camera 30, as illustrated in FIG. 5, and features extracted from the map image 61 stored in the storage unit 60.

Specifically, the feature extraction unit 52 detects feature points from the image P1 corresponding to the image of the road surface at the current time (the actual image) as illustrated in FIG. 5, and detects feature amounts of the feature points, i.e., the feature amounts representing the degrees of the luminance of the pixels around the feature points relative to the pixel where the feature points exist in the image P1. Similarly, the feature extraction unit 52 detects the feature points from the map image 61 captured in advance, and detects feature amounts of the feature points, i.e., the feature amounts representing the degrees of the luminance of the pixels around the feature points relative to the pixel where the feature points exist in the map image 61. Then, the matching unit 53 compares the feature amounts of the feature points in the image of the road surface at the current time (the actual image) and the feature amounts of the feature points in the map image 61 captured in advance to estimate the coordinates and the positional information of the autonomous travel vehicle 20.

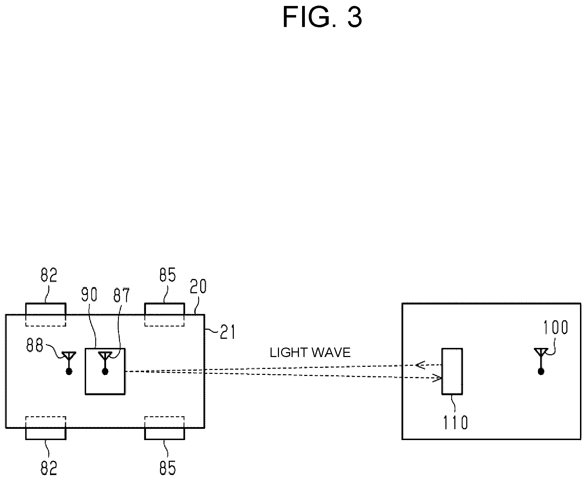

In storing the map image 61 in the storage unit 60 in advance, the coordinates and the positional information of a pattern of the road surface are stored as an environment map. The environment map is created with Simultaneous Localization and Mapping (SLAM). The SLAM is a technique that carries out localization of a moving body and mapping of its environment simultaneously, which allows the moving body to create a map of an unknown environment. A specific task is carried out using the created map information. The coordinates of the autonomous travel vehicle 20 are, more specifically, the coordinates indicating one point of the vehicle body 21 as illustrated in FIG. 3, for example, the coordinates at the center of the vehicle body 21 in the horizontal direction thereof. By comparing the road surface image acquired by the camera 30 and the map image acquired in advance, the coordinates and the positional information of the autonomous travel vehicle 20 are estimated.

The control device 40 controls the travel motor 81 and the steering motor 84 while estimating the coordinates and the positional information of the autonomous travel vehicle 20 on the map, thereby moving the autonomous travel vehicle 20 to a desired position.

As illustrated in FIGS. 1 and 3, the ground GNSS antenna 100, which corresponds to a satellite positioning instrument, is installed on the ground where the autonomous travel vehicle 20 travels. The ground GNSS antenna 100 corresponds to a known point. The ground GNSS antenna 100 is configured to receive radio waves from the satellites S1 to S8. As illustrated in FIG. 4, the ground GNSS antenna 100 is connected to the GNSS receiver 101 on the ground. The GNSS receiver 101 is connected to the wireless communication device 102 on the ground.

As illustrated in FIG. 4, the wireless communication device 91 and the control device 40 are connected in the autonomous travel vehicle 20. Wireless communication between the ground wireless communication device 102 on the ground and the wireless communication device 91 on the vehicle allows measurement information acquired through the ground GNSS antenna 100 to be sent to the control device 40 of the autonomous travel vehicle 20. In other words, the wireless communication device 91 corresponds to a vehicle wireless communication device mounted on the autonomous travel vehicle 20 configured to receive the measurement information from the wireless communication device 102 corresponding to a ground wireless communication device.

As illustrated in FIGS. 1 and 3, the vehicle GNSS antennas 87, 88 are mounted on the autonomous travel vehicle 20. The vehicle GNSS antennas 87, 88 are configured to receive radio waves from the satellites S1 to S8. As illustrated in FIG. 4, the vehicle GNSS antenna 87 and the vehicle GNSS antenna 88 are connected to the control device 40 through the GNSS receiver 89 in the autonomous travel vehicle 20. The control device 40 imports the measurement information acquired through the vehicle GNSS antennas 87, 88.

The positional information is measured as an angle of a direction with a satellite positioning (the positioning using the GNSS antennas 87, 88, 100).

As illustrated in FIGS. 1 and 3, the total station 110 is installed on the ground where the autonomous travel vehicle 20 travels. The total station 110 corresponds to the known point and is configured to obtain the coordinates and the positional information (the angle of the direction) of the autonomous travel vehicle 20 during the mapping. Specifically, a reflection member (e.g., a 360 degree prism) 90 is mounted on the autonomous travel vehicle 20 and reflects a light wave emitted from the total station 110, which is to be received by the total station 110. The coordinates and the positional information (the angle of the direction) of the autonomous travel vehicle 20 can be measured by observing a relative position between the total station 110 and the reflection member 90 with the light wave from the total station 110 reflected by the reflection member 90.

As illustrated in FIG. 4, the measurement information acquired through the total station 110 is transmitted wirelessly to the autonomous travel vehicle 20 through the wireless communication device 111. Such measurement information acquired through the total station 110 is imported to the control device 40 through the wireless communication device 92 in the autonomous travel vehicle 20. The positional information is measured as the angle with the measurement by the total station (a measurement instrument) 110. In other words, the wireless communication device 92 corresponds to a vehicle wireless communication device mounted on the autonomous travel vehicle 20 configured to receive the measurement information from the wireless communication device 111 corresponding to a ground wireless communication device.

As illustrated in FIG. 1, the reflection member 90 reflecting the light wave from the total station 110, the camera 30, and the vehicle GNSS antenna 87 are disposed on the same vertical axis Axv in the autonomous travel vehicle 20.

As illustrated in FIG. 4, when mapping outdoors, the mapping unit 70 of the control device 40 obtains the measurement information acquired through the ground GNSS antenna 100 and the measurement information acquired through the vehicle GNSS antennas 87, 88. The mapping unit 70 is configured to create a map image of the road surface Sr with which the coordinates and the positional information of the autonomous travel vehicle 20 are associated, from the image of the road surface Sr acquired by the camera 30 based on these pieces of information. Additionally, when mapping indoors, the mapping unit 70 of the control device 40 is configured to create a map image of the road surface Sr with which the coordinates and the positional information of the autonomous travel vehicle 20 are associated, from the image of the road surface Sr acquired by the camera 30 based on the measurement information acquired through the total station 110.

The following will describe an operation of the present embodiment.

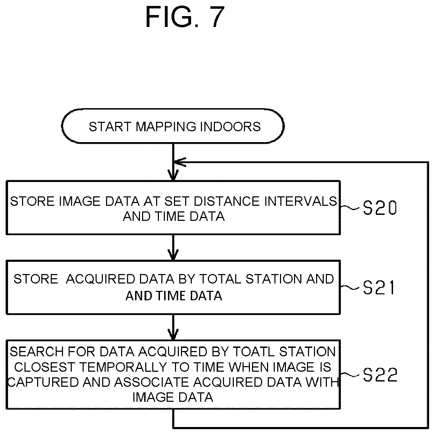

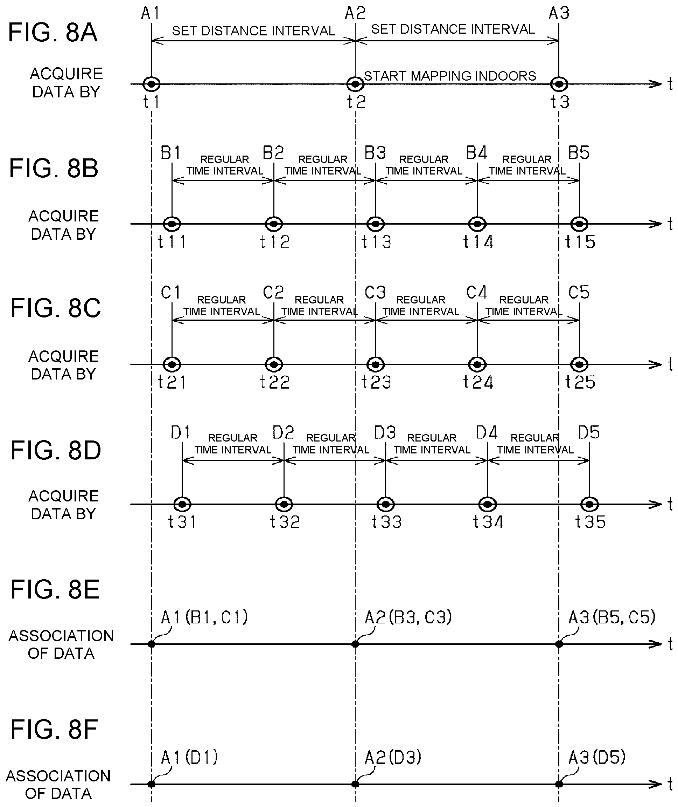

FIG. 6 illustrates an outdoor mapping process executed by the mapping unit 70 of the control device 40 while the autonomous travel vehicle 20 travels outdoors. FIG. 7 illustrates an indoor mapping process executed by the mapping unit 70 of the control device 40 while the autonomous travel vehicle 20 travels indoors. FIG. 8A indicates timings at which the camera 30 captures images. FIG. 8B indicates timings at which the ground GNSS antenna 100 acquires data. FIG. 8C indicates timings at which the vehicle GNSS antennas 87, 88 acquire data. FIG. 8D indicates timings at which the total station 110 acquires data. FIG. 8E indicates timings at which the data are associated with the map while the autonomous travel vehicle 20 travels outdoors. FIG. 8F indicates timings at which the data are associated with the map while the autonomous travel vehicle 20 travels indoors.

In mapping outdoors, the mapping unit 70 stores the image data acquired by the camera 30 at set distance intervals and the time data at Step S10 in FIG. 6. In FIG. 8A, the image data are stored, for example, at the times t1, t2 and t3 in FIG. 8A. The time data represent data of the time at which the image data are acquired by the camera 30.

In creating the map image outdoors, various measurement data are acquired along a desired travel route while the autonomous travel vehicle 20 travels at a low speed. Alternatively, in creating the map image outdoors, various measurement data are acquired along the desirable travel route while the autonomous travel vehicle 20 travels and stops repeatedly.

The mapping unit 70 stores the acquired data and the time data from the ground GNSS antenna 100 and the vehicle GNSS antenna 87, 88 at Step S11 in FIG. 6. In FIG. 8B, the acquired data through the ground GNSS antenna 100 are stored at regular time intervals, for example, at the times t11, t12, t13, t14, and t15. In FIG. 8C, the data acquired through the vehicle GNSS antennas 87, 88 are stored at regular time intervals, for example, at the times t21, t22, t23, t24, and t25.

The mapping unit 70 searches for the data acquired through the ground GNSS antenna 100 and the vehicle GNSS antenna 87, 88 closest temporally (closest in terms of time) to the time when each of the images is captured by the camera 30, and associates the acquired data with their corresponding image data at Step S12 in. In FIG. 8E, for example, the acquired data B1 by the ground GNSS antenna 100, and the acquired data C1 by the vehicle GNSS antenna 87, 88 are associated with the acquired data A1 by the camera 30. The acquired data B3 by the ground GNSS antenna 100, and the acquired data C3 by the vehicle GNSS antenna 87, 88 are associated with the acquired data A2 by the camera 30. The acquired data B5 by the ground GNSS antenna 100, and the acquired data C5 by the vehicle GNSS antenna 87, 88 are associated with the acquired data A3 by the camera 30.

As a result, data are organized by time with all information (calculation values) inputted to one processing system (the control device 40).

In FIG. 1, the radio waves from the four satellites S1 to S4 are received by the vehicle GNSS antenna 87 and by the ground GNSS antenna 100 simultaneously to estimate the coordinates (the latitude and the longitude) and the positional information of the autonomous travel vehicle 20. In addition, the radio waves from the four satellites S5 to S8 are received by the vehicle GNSS antenna 88 and by the ground GNSS antenna 100 simultaneously to estimate the coordinates (the latitude and the longitude) and the positional information of the autonomous travel vehicle 20.

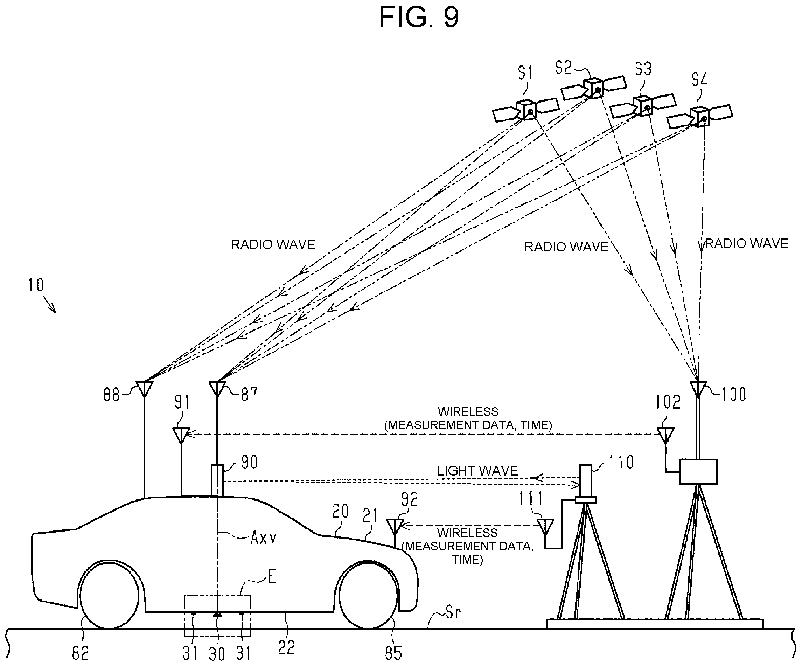

Alternatively, instead of FIG. 1, as illustrated in FIG. 9, the autonomous travel system 10 may be configured such that the radio waves from the four satellites S1 to S4 are received by the vehicle GNSS antenna 87 and by the ground GNSS antenna 100 simultaneously to estimate the coordinates (the latitude and the longitude) and the positional information of the autonomous travel vehicle 20, and the radio waves from the four satellites S1 to S4 are received by the vehicle GNSS antenna 88 and by the ground GNSS antenna 100 simultaneously to estimate the coordinates (the latitude and the longitude) and the positional information of the autonomous travel vehicle 20.

Here, interferometric positioning, in which radio waves from the satellite are simultaneously observed by the ground GNSS antenna 100 corresponding to the known point and by the vehicle GNSS antenna 87 corresponding to the unknown point to observe the coordinates of the autonomous travel vehicle 20 corresponding to the unknown point, in particular, the Real Time Kinematic-Global Navigation Satellite System (RTK-GNSS) method is used to perform positioning. Similarly, interferometric positioning, in which radio waves from the satellite are simultaneously observed by the ground GNSS antenna 100 corresponding to the known point and by the vehicle GNSS antenna 88 corresponding to the unknown point to observe the coordinates of the autonomous travel vehicle 20 corresponding to the unknown point, in particular, the RTK-GNSS method is used to perform positioning. In this way, an error in estimation of the coordinates may be reduced by providing the satellite positioning instrument (the GNSS antennas 87, 88) on the vehicle and the satellite positioning instrument (the GNSS antenna 100) on the ground, sending the measurement information from the ground side (the reference side) to the moving body side (the vehicle side), and estimating the coordinates with the RTK-GNSS method. As a result, the accuracy in the self-position estimation and the precision in the autonomous travelling of the autonomous travel vehicle 20 may be improved due to the improvement of the accuracy of the map. Further, the positional information (the angle of the direction) may be calculated from the two points by providing two vehicle GNSS antennas.

Specifically, for example, the coordinates are estimated with interferometric positioning using the ground GNSS antenna 100 and the vehicle GNSS antenna 87. Further, the positional information (the angle of the direction) is estimated from two positions, one of which is estimated with the interferometric positioning using the ground GNSS antenna 100 and the vehicle GNSS antenna 87, and the other of which is estimated with interferometric positioning using the ground GNSS antenna 100 and the vehicle GNSS antenna 88.

It is noted that the wireless communication device may change its wireless communication method depending on the range of mapping, and a designated low power wireless communication is used if it is less than the radius of 500 meters and the LTE packet communication is used if it is equal to or greater than the radius of 500 meters.

In mapping indoors, the mapping unit 70 stores the image data acquired by the camera 30 at the set distance intervals and the time data at Step S20 in FIG. 7. In FIG. 8A, the image data are stored, for example, at the time t1, t2 and t3.

In creating the map image indoor, various data are acquired along a desired travel route while the autonomous travel vehicle 20 travels at a low speed. Alternatively, in creating the map image indoors, various measurement data are acquired along the desired travel route while the autonomous travel vehicle 20 travels and stops repeatedly.

The mapping unit 70 stores the acquired data by the total station 110 and the time data at Step S21 in FIG. 7. In FIG. 8D, the acquired data are stored at regular time intervals, for example, at the time t31, t32, t33, t34, and t35.

The mapping unit 70 searches for the data acquired by the total station 110 closest temporally to the time when each of the images is captured by the camera 30, and associates the acquired data with their corresponding image data at Step S22 in FIG. 7. In FIG. 8F, the acquired data D1 by the total station 110 are associated with the acquired data A1 by the camera 30. The acquired data D3 by the total station 110 are associated with the acquired data A2 by the camera 30. The acquired data D5 by the total station 110 are associated with the acquired data A3 by the camera 30. This permits highly accurate mapping indoors.

In this way, by executing Step S12 in FIG. 6, when mapping (the off-line process), the mapping unit 70 searches for the measurement information acquired through the ground GNSS antenna 100 and the measurement information acquired through the vehicle GNSS antenna 87, 88 closest temporally to the time when each of the images of the road surface Sr is acquired by the camera 30. Then, the mapping unit 70 creates the map image 61 of the road surface Sr with which the coordinates and the positional information of the autonomous travel vehicle 20 are associated. All the images are processed in this way to create the associated map image 61 of the road surface Sr. Similarly, by executing Step S22 in FIG. 7, when mapping (the off-line process), the mapping unit 70 searches for the measurement information acquired through the total station 110 closest temporally to the time when each of the images of the road surface Sr is acquired by the camera 30. Then, the mapping unit 70 creates the map image 61 of the road surface Sr with which the coordinates and the positional information of the autonomous travel vehicle 20 are associated. All the images are processed in this way to create the associated map image 61 of the road surface Sr.

The above-described embodiment offers the following effects.
(1) The configuration of the autonomous travel system 10 includes the camera 30 as the road surface image acquisition device disposed on the lower surface 22 of the vehicle body 21 of the autonomous travel vehicle 20 and configured to acquire images of the road surface Sr below the vehicle body 21. The autonomous travel system 10 includes the storage unit 60 mounted on the autonomous travel vehicle 20 and configured to store the map image 61 of the road surface Sr associated with the coordinates and the positional information of the autonomous travel vehicle 20. The autonomous travel system 10 includes the estimation unit 51 mounted on the autonomous travel vehicle 20 and configured to estimate the coordinates and the positional information of the autonomous travel vehicle 20 by comparing the features F1 to F5 extracted from the image of the road surface Sr acquired by the camera 30 and the features extracted from the map image 61. The autonomous travel system 10 includes the ground GNSS antenna 100 as the ground satellite signal reception antenna installed on the ground where the autonomous travel vehicle 20 travels and configured to receive radio waves from the satellites S1 to S8. The autonomous travel system 10 includes the wireless communication devices 91, 102 for transmitting the measurement information acquired through the ground GNSS antenna 100 to the autonomous travel vehicle 20 wirelessly. The autonomous travel system 10 includes the vehicle GNSS antennas 87, 88 as the vehicle satellite signal reception antenna mounted on the autonomous travel vehicle 20 and configured to receive radio waves from the satellites S1 to S8. The autonomous travel system 10 includes the mapping unit 70 mounted on the autonomous travel vehicle 20 and configured to create the map image 61 of the road surface Sr with which the coordinates and the positional information of the autonomous travel vehicle 20 are associated, from the images of the road surface Sr acquired by the camera 30, based on the measurement information by the ground GNSS antenna 100 and the measurement information by the vehicle GNSS antennas 87, 88, in mapping outdoors.

In this way, the GNSS antennas 87, 88 are mounted on the autonomous travel vehicle 20. The measurement information acquired through the ground GNSS antenna 100 installed on the ground is transmitted wirelessly to the autonomous travel vehicle 20. The mapping unit 70 mounted on the autonomous travel vehicle 20 creates the map image 61 of the road surface Sr with which the coordinates and the positional information of the autonomous travel vehicle 20 are associated, from the images of the road surface acquired by the camera 30 based on the measurement information acquired through the ground GNSS antenna 100 and the measurement information acquired through the vehicle GNSS antennas 87, 88, in mapping outdoors.

This permits creating the map image 61 of the road surface Sr with which the coordinates and the positional information of the autonomous travel vehicle 20 are associated, while minimizing an error. As a result, the accuracies of the coordinates and the positional information of the autonomous travel vehicle 20 to be associated with the acquired image may be improved.

That is, the coordinates (two dimensional coordinates) and the positional information of the autonomous travel vehicle 20 may be estimated more accurately with the interferometric positioning using the satellite signal reception antenna mounted on the autonomous travel vehicle 20 and the satellite signal reception antenna (the known point) installed on the ground as compared to with one-point positioning.
(2) The mapping unit 70 searches for the measurement information acquired through the ground GNSS antenna 100 and the measurement information acquired through the vehicle GNSS antenna 87, 88 closest temporally to the time when each of the images of the road surface Sr is acquired by the camera 30, and creates the map image 61 of the road surface Sr with which the coordinates and the positional information of the autonomous travel vehicle 20 are associated. As a result, highly accurate positioning can be achieved.
(3) The camera 30 and the vehicle GNSS antenna 87 are disposed in the same vertical axis Axv in the autonomous travel vehicle 20. This arrangement of the position of the camera 30 and the position of the vehicle GNSS antenna 87 permits positioning with high accuracy.
(4) The autonomous travel system is provided with two vehicle GNSS antennas 87, 88. This configuration permits acquiring accurate positional information (the angle of the direction) of the autonomous travel vehicle 20 by using the two satellite signal reception antennas (the vehicle GNSS antennas 87, 88) mounted on the autonomous travel vehicle 20.
(5) The configuration of the autonomous travel system 10 includes the total station 110 as the measurement instrument installed on the ground to observe the coordinates and the positional information (the angle of the direction) of the autonomous travel vehicle 20. The autonomous travel system 10 includes the wireless communication devices 92, 111 as the wireless communication devices for the measurement instrument to transmit measurement information by the total station 110 to the autonomous travel vehicle 20 wirelessly. In mapping indoors, the mapping unit 70 creates the map image 61 of the road surface Sr with which the coordinates and the positional information of the autonomous travel vehicle 20 are associated, from the images of the road surface Sr acquired by the camera 30 based on the measurement information by the total station 110.

Thus, the total station 110 is provided on the ground, and the measurement information regarding the coordinates and the positional information (the angle of the direction) of the autonomous travel vehicle 20 is transmitted to the autonomous travel vehicle 20 wirelessly. Then, the mapping unit 70 creates the map image 61 of the road surface Sr associated with the coordinates and the positional information of the autonomous travel vehicle 20 are associated, from the images of the road surface acquired by the camera 30 based on the measurement information by the total station 110, in mapping indoors.

As a result, the map image of the road surface with which the coordinates and the positional information of the autonomous travel vehicle 20 are associated may be created indoors.

(6) In the autonomous travel vehicle 20, the reflection member 90 reflecting the light wave from the total station 110, the camera 30, and the vehicle GNSS antenna 87 are disposed on the same vertical axis Axv. This arrangement of the position of the camera 30, the position of the vehicle GNSS antenna 87, and the position of the reflection member 90 permits positioning with high accuracy.

The present disclosure is not limited to the above-described embodiment, but may be modified in various manners, as exemplified below.

Although two vehicle GNSS antennas (the vehicle satellite signal reception antennas) 87, 88 are used in the above-described embodiment, only one vehicle GNSS antenna may be used.

In a case where the autonomous travel vehicle travels only outdoors, a positioning instrument (the total station) may be omitted, and a map may be created based on the coordinates and the positional information acquired through the GNSS antennas. This permits reducing the cost of the autonomous travel system.

In a case where the autonomous travel vehicle travels indoors and outdoors, a direction meter capable of finding a direction indoors such as a compass may be added. This improves the accuracy of the mapping indoors and outdoors.

Although the camera 30 is used as the road surface image acquisition device in the above embodiment, a device other than the camera may be used as the road surface image acquisition device . For example, a linear sensor (a linear image sensor) may be used as the road surface image acquisition device.

Although the ground GNSS antenna 100 is used as the ground satellite signal reception antenna and the vehicle GNSS antennas 87, 88 are used as the vehicle satellite signal reception antennas in the above-described embodiment, a ground GPS antenna and a vehicle GPS antenna may be used as the ground satellite signal reception antenna and the vehicle satellite signal reception antenna, respectively.

## Claims

1. An autonomous travel system (10) comprising:
a road surface image acquisition device (30) disposed on a lower surface (22) of a vehicle body (21) of an autonomous travel vehicle (20), and configured to acquire an image of a road surface (Sr) below the vehicle body (21);
a storage unit (60) mounted on the autonomous travel vehicle (20), and configured to store a map image (61) of the road surface (Sr) with which coordinates and positional information of the autonomous travel vehicle (20) are associated;
an estimation unit (51) mounted on the autonomous travel vehicle (20), and configured to estimate the coordinates and the positional information of the autonomous travel vehicle (20) by comparing a feature (F1, F2, F3, F4, F5) extracted from the image of the road surface (Sr) acquired by the road surface image acquisition device (30) and a feature (F1, F2, F3, F4, F5) extracted from the map image (61);
a ground satellite signal reception antenna (100) installed on a ground where the autonomous travel vehicle (20) travels, and configured to receive a radio wave from a satellite (S1, S2, S3, S4, S5, S6, S7, S8);
a ground wireless communication device (102) configured to transmit measurement information acquired through the ground satellite signal reception antenna (100) to the autonomous travel vehicle (20) wirelessly;
a vehicle wireless communication device (91) mounted on the autonomous travel vehicle (20), and configured to receive the measurement information from the ground wireless communication device (102);
a vehicle satellite signal reception antenna (87, 88) mounted on the autonomous travel vehicle (20), and configured to receive the radio wave from the satellite (S1, S2, S3, S4, S5, S6, S7, S8);
a mapping unit (70) mounted on the autonomous travel vehicle (20), and configured to create the map image (61) of the road surface (Sr) with which the coordinates and the positional information are associated, from the image of the road surface (Sr) acquired by the road surface image acquisition device (30) based on the measurement information acquired through the ground satellite signal reception antenna (100) and the measurement information acquired through the vehicle satellite signal reception antenna (87, 88), in mapping outdoors;
**characterized in that** the autonomous travel system further comprises:
a measurement instrument (110) installed on the ground, and configured to measure the coordinates and the positional information of the autonomous travel vehicle (20);
a ground wireless communication device (111) for the measurement instrument (110) configured to transmit measurement information acquired through the measurement instrument (110) to the autonomous travel vehicle (20) wirelessly;
a vehicle wireless communication device (92) mounted on the autonomous travel vehicle (20), and configured to receive the measurement information from the ground wireless communication device (111) (112) for the measurement instrument (110),
wherein the mapping unit (70) is configured to create the map image (61) of the road surface (Sr) with which the coordinates and the positional information of the autonomous travel vehicle (20) are associated, from the image of the road surface (Sr) acquired by the road surface image acquisition device (30) based on the measurement information acquired through the measurement instrument (110), in mapping indoors; and
a reflection member (90) reflecting a light wave from the measurement instrument (110), the road surface image acquisition device (30), and the vehicle satellite signal reception antenna (87, 88) are disposed on the same vertical axis in the autonomous travel vehicle (20),
wherein the measurement instrument (110) is a total station.

2. The autonomous travel system (10) according to claim 1, **characterized in that** the mapping unit (70) is configured to search for the measurement information acquired through the ground satellite signal reception antenna (100), and the measurement information acquired through the vehicle satellite signal reception antenna (87, 88) closest temporally to a time when the image of the road surface (Sr) is acquired by the road surface image acquisition device (30), and create the map image (61) of the road surface (Sr) with which the coordinates and the positional information of the autonomous travel vehicle (20) are associated.

## Patentansprüche

1. Autonomes Fahrsystem (10), das Folgendes umfasst:
eine Straßenflächenbilderfassungsvorrichtung (30), die auf einer unteren Fläche (22) einer Fahrzeugkarosserie (21) eines autonom fahrenden Fahrzeugs (20) angeordnet ist und dazu konfiguriert ist, ein Bild einer Straßenfläche (Sr) unterhalb der Fahrzeugkarosserie (21) zu erfassen;
eine Speichereinheit (60), die an dem autonom fahrenden Fahrzeug (20) montiert ist und dazu konfiguriert ist, ein Kartenbild (61) der Straßenfläche (Sr) zu speichern, dem Koordinaten und Positionsinformationen des autonom fahrenden Fahrzeugs (20) zugeordnet sind;
eine Schätzeinheit (51), die an dem autonom fahrenden Fahrzeug (20) montiert ist und dazu konfiguriert ist, die Koordinaten und die Positionsinformationen des autonom fahrenden Fahrzeugs (20) durch Vergleichen eines Merkmals (F1, F2, F3, F4, F5), das aus dem Bild der Straßenfläche (Sr) extrahiert wurde, das durch die Straßenflächenbilderfassungsvorrichtung (30) erfasst wurde, und eines Merkmals (F1, F2, F3, F4, F5), das aus dem Kartenbild (61) extrahiert wurde, zu schätzen;
eine Bodensatellitensignal-Empfangsantenne (100), die auf einem Boden installiert ist, auf dem das autonom fahrende Fahrzeug (20) fährt, und die dazu konfiguriert ist, eine Funkwelle von einem Satelliten (S1, S2, S3, S4, S5, S6, S7, S8) zu empfangen;
eine drahtlose Bodenkommunikationsvorrichtung (102), die dazu konfiguriert ist, Messinformationen, die durch die Bodensatellitensignal-Empfangsantenne (100) erfasst wurden, drahtlos an das autonom fahrende Fahrzeug (20) zu übertragen;
eine drahtlose Fahrzeugkommunikationsvorrichtung (91), die an dem autonom fahrenden Fahrzeug (20) montiert ist und dazu konfiguriert ist, die Messinformationen von der drahtlosen Bodenkommunikationsvorrichtung (102) zu empfangen;
eine Fahrzeugsatellitensignal-Empfangsantenne (87, 88), die an dem autonom fahrenden Fahrzeug (20) montiert ist und dazu konfiguriert ist, die Funkwelle von dem Satelliten (S1, S2, S3, S4, S5, S6, S7, S8) zu empfangen;
eine Kartierungseinheit (70), die an dem autonom fahrenden Fahrzeug (20) montiert ist und dazu konfiguriert ist, das Kartenbild (61) der Straßenfläche (Sr), dem die Koordinaten und die Positionsinformationen zugeordnet sind, aus dem Bild der Straßenfläche (Sr), das durch die Straßenflächenbilderfassungsvorrichtung (30) erfasst wurde, basierend auf den Messinformationen, die durch die Bodensatellitensignal-Empfangsantenne (100) erfasst wurden, und den Messinformationen, die durch die Fahrzeugsatellitensignal-Empfangsantenne (87, 88) erfasst wurden, beim Kartieren im Freien zu erschaffen;
**dadurch gekennzeichnet, dass** das autonome Fahrsystem weiter Folgendes umfasst:
ein Messinstrument (110), das auf dem Boden installiert ist und dazu konfiguriert ist, die Koordinaten und die Positionsinformationen des autonom fahrenden Fahrzeugs (20) zu messen;
eine drahtlose Bodenkommunikationsvorrichtung (111) für das Messinstrument (110), die dazu konfiguriert ist, Messinformationen, die durch das Messinstrument (110) erfasst wurden, drahtlos an das autonom fahrende Fahrzeug (20) zu übertragen;
eine drahtlose Fahrzeugkommunikationsvorrichtung (92), die an dem autonom fahrenden Fahrzeug (20) montiert ist und dazu konfiguriert ist, die Messinformationen von der drahtlosen Bodenkommunikationsvorrichtung (111) für das Messinstrument (110) zu empfangen,
wobei die Kartierungseinheit (70) dazu konfiguriert ist, das Kartenbild (61) der Straßenfläche (Sr), dem die Koordinaten und die Positionsinformationen des autonom fahrenden Fahrzeugs (20) zugeordnet sind, aus dem Bild der Straßenfläche (Sr), das durch die Straßenflächenbilderfassungsvorrichtung (30) erfasst wurde, basierend auf den Messinformationen, die durch das Messinstrument (110) erfasst wurden, beim Kartieren in einem Innenraum zu erschaffen; und
wobei ein Reflexionselement (90), das eine Lichtwelle von dem Messinstrument (110) reflektiert, die Straßenflächenbilderfassungsvorrichtung (30) und die Fahrzeugsatellitensignal-Empfangsantenne (87, 88) auf derselben vertikalen Achse in dem autonom fahrenden Fahrzeug (20) angeordnet sind,
wobei das Messinstrument (110) eine Totalstation ist.

2. Autonomes Fahrsystem (10) nach Anspruch 1, **dadurch gekennzeichnet, dass**
die Kartierungseinheit (70) dazu konfiguriert ist, nach den durch die Bodensatellitensignal-Empfangsantenne (100) erfassten Messinformationen und den durch die Fahrzeugsatellitensignal-Empfangsantenne (87, 88) erfassten Messinformationen zu suchen, die zeitlich am nächsten zu einem Zeitpunkt liegen, zu dem das Bild der Straßenfläche (Sr) durch die Straßenflächenbilderfassungsvorrichtung (30) erfasst wird, und das Kartenbild (61) der Straßenfläche (Sr) zu erschaffen, dem die Koordinaten und die Positionsinformationen des autonom fahrenden Fahrzeugs (20) zugeordnet sind.

## Revendications

1. Système (10) de déplacement autonome comprenant :
un dispositif (30) d'acquisition d'image de surface de route disposé sur une surface inférieure (22) d'une carrosserie (21) de véhicule d'un véhicule (20) à déplacement autonome et configuré pour acquérir une image d'une surface (Sr) de route sous la carrosserie (21) de véhicule ;
une unité (60) de stockage montée sur le véhicule (20) à déplacement autonome et configurée pour stocker une image cartographique (61) de la surface (Sr) de route à laquelle des coordonnées et des informations de position du véhicule (20) à déplacement autonome sont associées ;
une unité (51) d'estimation montée sur le véhicule (20) à déplacement autonome et configurée pour estimer les coordonnées et les informations de position du véhicule (20) à déplacement autonome en comparant une caractéristique (F1, F2, F3, F4, F5) extraite à partir de l'image de la surface (Sr) de route acquise par le dispositif (30) d'acquisition d'image de surface de route et une caractéristique (F1, F2, F3, F4, F5) extraite à partir de l'image cartographique (61) ;
une antenne (100) de réception de signal satellite au sol installée sur un sol où le véhicule (20) à déplacement autonome se déplace, et configurée pour recevoir une onde radio provenant d'un satellite (S1, S2, S3, S4, S5, S6, S7, S8) ;
un dispositif (102) de communication sans fil au sol configuré pour transmettre sans fil des informations de mesure acquises par l'intermédiaire de l'antenne (100) de réception de signal satellite au sol au véhicule (20) à déplacement autonome ;
un dispositif (91) de communication sans fil de véhicule monté sur le véhicule (20) à déplacement autonome et configuré pour recevoir les informations de mesure provenant du dispositif (102) de communication sans fil au sol ;
une antenne (87, 88) de réception de signal satellite de véhicule montée sur le véhicule (20) à déplacement autonome et configurée pour recevoir l'onde radio provenant du satellite (S1, S2, S3, S4, S5, S6, S7, S8) ; et
une unité (70) de cartographie montée sur le véhicule (20) à déplacement autonome et configurée pour créer l'image cartographique (61) de la surface (Sr) de route à laquelle les coordonnées et les informations de position sont associées, à partir de l'image de la surface (Sr) de route acquise par le dispositif (30) d'acquisition d'image de surface de route sur la base des informations de mesure acquises par l'intermédiaire de l'antenne (100) de réception de signal satellite au sol et des informations de mesure acquises par l'intermédiaire de l'antenne (87, 88) de réception de signal satellite de véhicule, lors d'une cartographie en extérieur ;
**caractérisé en ce que** le système de déplacement autonome comprend en outre :
un instrument (110) de mesure installé au sol et configuré pour mesurer les coordonnées et les informations de position du véhicule (20) à déplacement autonome ;
un dispositif (111) de communication sans fil au sol pour l'instrument (110) de mesure configuré pour transmettre sans fil des informations de mesure acquises par l'intermédiaire de l'instrument (110) de mesure au véhicule (20) à déplacement autonome ;
un dispositif (92) de communication sans fil de véhicule monté sur le véhicule (20) à déplacement autonome et configuré pour recevoir les informations de mesure provenant du dispositif (111) de communication sans fil au sol pour l'instrument (110) de mesure,
dans lequel l'unité (70) de cartographie est configurée pour créer l'image cartographique (61) de la surface (Sr) de route à laquelle les coordonnées et les informations de position du véhicule (20) à déplacement autonome sont associées, à partir de l'image de la surface (Sr) de route acquise par le dispositif (30) d'acquisition d'image de surface de route sur la base des informations de mesure acquises par l'intermédiaire de l'instrument (110) de mesure, lors d'une cartographie en intérieur ; et
un élément (90) de réflexion réfléchissant une onde lumineuse provenant de l'instrument (110) de mesure, le dispositif (30) d'acquisition d'image de surface de route et l'antenne (87, 88) de réception de signal satellite de véhicule sont disposés sur le même axe vertical dans le véhicule (20) à déplacement autonome,
dans lequel l'instrument (110) de mesure est une station totale.

2. Système (10) de déplacement autonome selon la revendication 1, **caractérisé en ce que**
l'unité (70) de cartographie est configurée pour rechercher les informations de mesure acquises par l'intermédiaire de l'antenne (100) de réception de signal satellite au sol et les informations de mesure acquises par l'intermédiaire de l'antenne (87, 88) de réception de signal satellite de véhicule la plus proche temporellement d'un instant où l'image de la surface (Sr) de route est acquise par le dispositif (30) d'acquisition d'image de surface de route, et créer l'image cartographique (61) de la surface (Sr) de route à laquelle les coordonnées et les informations de position du véhicule (20) à déplacement autonome sont associées.
